# EUROPEAN PATENT SPECIFICATION

(11) **EP 1 166 061 B1**
(45) Date of publication and mention of the grant of the patent: **28.05.2003**
(21) Application number: 00912796.0
(22) Date of filing: 24.03.2000
(51) Int. Cl.: G01J 3/50, H04N 5/217

(54) **METHOD FOR CALIBRATING A CAMERA IN A COLOUR MONITORING SYSTEM**
VERFAHREN ZUM KALIBRIEREN DER KAMERA EINES FARBÜBERWACHUNGSSYSTEMS
PROCEDE DE CALIBRAGE D'UNE CAMERA D'UN SYSTEME DE MONITORAGE DE COULEUR

(30) Priority: 25.03.1999 GB 9906765
(43) Date of publication of application: 02.01.2002
(73) Proprietor: ELTROMAT GmbH, D-33818 Leopoldshöhe (DE)
(72) Inventor: CONNOLLY, Christine, Huddersfield, West Yorkshire HD8 8DN (GB); FOWLER, James Andrew, Bradford, West Yorkshire BD14 6LY (GB)
(74) Representative: Schmitz, Hans-Werner, Dipl.-Ing.
(86) International application number: GB0001127
(87) International publication number: WO00058698

(56) References cited:
- US-A- 5 038 369
- US-A- 5 221 963
- US-A- 5 267 053
- US-A- 5 589 880

## Description

The invention relates to colour monitoring.

PCT application WO 96/05489 describes a colour inspection system and method by which a video camera is controlled for the acquisition of a colour image under varying image capture conditions. A fast moving (approximately 500 metres min⁻¹) web of printed material passing in front of the camera is monitored. The video camera of such a system has a red, green and blue output and is provided with a controllable iris aperture, a controllable overall RGB signal gain, independently controllable RGB signal channel gain, or a controllable RGB signal channel balance. The controllable parameters are controlled by a control unit in the form of a personal computer or other suitable processor having an image capture board. The processor generates signals from an image signal received from the video camera, the signals being used to correct the controllable parameters to improve camera image capture performance.

The subject of the present application comprises an improvement to the system and methods described in the aforementioned PCT application.

A problem of the prior system and colour monitoring systems in general to be addressed by embodiments of the present invention relates to the correction of camera output when used to monitor colours. In an ideal world, the video camera characteristic in terms of RGB output would be a linear characteristic so that zero light intensity from a completely black scene would give zero voltage outputs from a camera. Again, in an ideal world, the RGB outputs would increase linearly accordingly to increasing light intensity for a particular given colour. Unfortunately, real cameras exhibit an imperfect characteristic dependent upon ambient temperature giving an offset from the origin (i.e. a non-zero volt output for zero light intensity input), after which there follows a generally linear response region which then, above a particular light intensity will tend to flatten out to give a non-linear response.

A method for keeping the camera signal level below a saturation level is described in US-A-5 589 880. Camera signal offset compensation is described in US-A-5 038 369 or US-A-5 267 053.

With a view to solving or reducing the first problem mentioned above, there is provided a method of calibrating a colour monitoring system so as to compensate for non-ideal real camera characteristics, the method comprising: establishing a camera offset by measuring or calculating the output voltage of the camera when substantially no light falls on any of its sensor elements, hereinafter referred to as establishing the offset; establishing the point at which a graph of input light intensity against camera output voltage starts to deviate from a substantially linear characteristic, hereinafter referred to as establishing the knee; and restricting the amount of light incident on all sensor elements of the camera such that the maximum output corresponds to a voltage at, or below, the knee, and lower light intensities are all within the range of linear operation.

The step of establishing of camera offset may be carried out on a periodical basis to keep pace with the variations in offset value caused by variation in ambient conditions.

The step of establishing offset may be carried out whenever an image capture operation for capturing a desired image to be monitored is to be carried out.

Setting the point of zero light intensity may be achieved by closing the camera iris.

Setting the point of zero light intensity may be achieved by setting the camera to monitor a black image, or a black part of an image field of the camera.

Setting the point of zero light intensity may be achieved by extrapolating from measurements obtained from two or more points of known reflectance somewhere in an image field of the camera.

Preferably, one point of known reflectance comprises an integral part of the desired image itself.

Preferably, one point of known reflectance comprises a white reference tile within the image field.

This has the advantage that it may be done for every image captured.

The above-mentioned problem is solved by the invention as set out in the claims.

Specific embodiments of the invention will now be described, by way of example only, with reference to the accompanying drawings, in which:
Figure 1 shows in schematic form a colour monitoring apparatus;
Figure 2 is a schematic graph showing camera output in volts, against input light intensity;
Figure 3 is a schematic diagram showing a graduated grey scale which may be incorporated within an image to be captured for ascertaining camera response;
Figure 4 shows a black tile and a white tile forming part of a test image;
Figure 5 illustrates how readings corresponding to the black tile and white tile of Figure 4 may be used to determine a camera offset;
Figure 6 is a schematic diagram showing possible relative size of repeat length with respect to size of field of view;
Figures 7A to 7C show respectively first to third patterns to be printed by first to third cylinders and to be monitored using an opportunistic triggering technique;
Figures 8 and 9 show respectively a training image and a newly captured image;
Figures 10A and 10B show a perimeter area of a displaced image which it is desired to inspect to sub-pixel accuracy; and
Figure 11 shows a hardware arrangement featuring a scanner arranged to move a camera and flash in a transverse direction relative to a moving web.

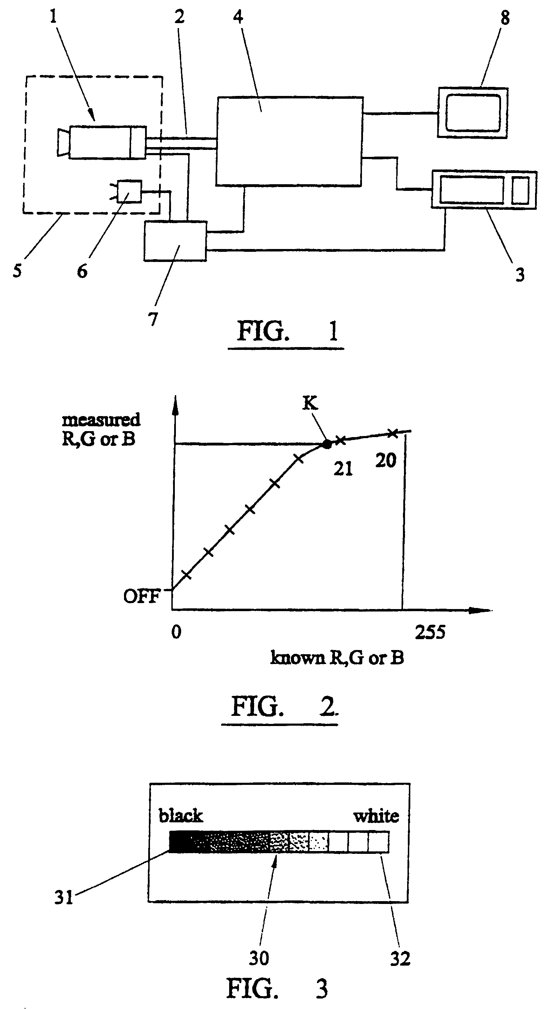

Referring to Figure 1 of the accompanying drawings, there is shown a typical set of apparatus which may be used for colour monitoring. The apparatus comprises an interface unit for interfacing to a conventional commercially available video camera 1, having a red, green, blue output (RGB output) and having a controllable iris aperture, a controllable overall gain, independently controllable RGB signal channel gains, or a controllable signal channel balance. The interface comprises an RS232C bus 2 to enable remote control of the camera and a conventional commercially available personal computer 3 having a conventional commercially available image capture board 4. The camera 1 is positioned within a lighting box 5 which also contains a flash lighting source 6. A trigger circuit 7 is provided which is connected to the camera output 1, to the lighting source 6 and to the image capture board 4 and to the PC 3. A monitor 8 is also provided.

The computer is adapted for control of the camera via the RS232C data bus, by means of a dedicated application programme. The dedicated application programme may form part of a larger computer programme, or may be run in conjunction with other application programmes.

Concerning the problem of non-linearity of camera characteristics, an embodiment of the present invention will now be described with reference to Figures 2 to 5.

Figure 2 shows a typical camera characteristic in terms of increasing light intensity of a known colour (R, G or B) along the horizontal axis and measured R, G or B output in volts along the vertical axis.

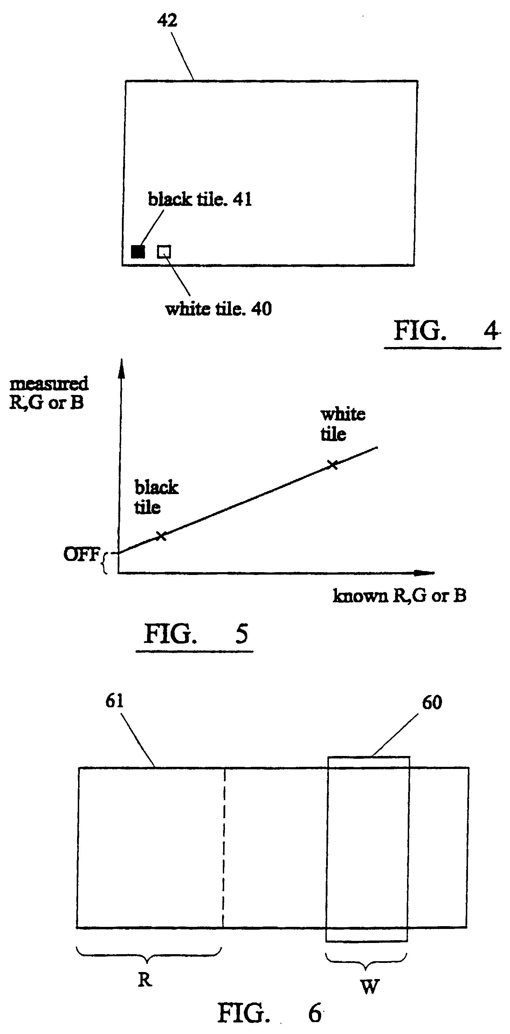

The graph of Figure 2 may be obtained, for instance, by capturing the image of a collection of paint chips of graduated colour, such as the grey scale 30 shown in Figure 3. All paint chips must be captured in a single image capture period and under uniform illumination.

The known colours can be measured using established colorimetric techniques, i.e. a colorimeter or spectrophotometer traceable to national colour measurement standards, coupled with a standard conversion matrix to convert the CIE tristimulus measurements into camera R, G, B values.

Referring to Figure 3, the left most paint chip 31 is black, the right most paint chip 32 is white and, in between, are chips of intermediate shades of grey. The images of each of those chips are captured to plot the graph of Figure 2. Note that the vertical axis may be any one of the measured R, G or B outputs and also that in obtaining this graph the iris of the camera 1 is set so that the white chip produces a near saturation R, G and B output, the horizontal axis represents increasing light intensity from black to white, in known increments as determined by the test pattern of Figure 3.

Referring to the characteristic plot of Figure 2, it can be seen that the graph is generally linear, but tends to flatten out above a knee point (K). Also, there is an origin offset (OFF). It will be seen that in the plot illustrated, the paint chip 32 representing the highest light intensity level, pure white (i.e. the most white) is shown as a plotted point 20 which falls within the non-linear region. The graph of Figure 2 also shows the next "nearest to white" paint chip as giving a plotted point 21 which is in the non-linear region.

In an ideal world, the camera characteristic would pass through the origin and be totally linear. However, as seen from the above, conventional video cameras do not operate in this ideal fashion and it is necessary to compensate for this non-linearity if accurate determinations of light intensity are to be made.

In order to provide an effective compensation, the offset (OFF) and the knee point (K) need to be determined.

To complicate matters more, camera characteristics including the offset change by measurable amounts as the camera 1 warms up and cools down, and as ambient temperature changes. So for accurate colour monitoring purposes, compensation needs to occur by varying amounts every time an image is captured.

In order to determine the offset, a black object (zero reflectance) may be included in the image at each image capture point. By analyzing the output data from the camera relating to the black object area of the image, the average corresponding R, G and B output values may be found and those values can be directly taken as the offset values for the respective R, G and B channels.

The drawback with this approach is that it is difficult to get a perfectly black object, and to make sure that it picks up no contaminant prior to being monitored that changes its colour. In view of this, a better approach is to use a white ceramic tile 40 (see Figure 4) of known RGB, and a black ceramic tile 41 of known RGB simultaneously present within the camera field of view 42 (the RGBs can be measured using a colorimeter or a spectrophotometer traceable to national colour measurement standards and by using a standard matrix for converting those measurements to camera RGB values). Ceramic tiles may be easily cleaned by using lens tissue before image capture takes place.

Prior to using this black and white tile method, it must be established that the camera is operating in a linear fashion. This may be done by forming the graph of Figure 2, restricting the size of aperture to avoid going beyond the knee, and then repeating the graph measurements to check that all of the points on the measured grey scale now produce R, G, B outputs within the linear region. All of the grey scale needs to be captured during a single capture period (i.e. from a single image) under uniform lighting conditions. Adjusting the voltage output to be a proportionate reduction of its full scale value when inspecting white portions of the image will in practice, suffice in many practical situations as long as the whole field of view is uniformly lit or the white tile is in a sufficiently well lit part of the field of view that no part of the field of view produces above knee signals and may be used for all camera operations once it has been verified that the camera is indeed operating wholly within the linear zone.

Having ensured that the camera is being operated below its knee point, a graph as shown in Figure 5 may be obtained from the measured white tile and black tile by drawing a line between the two known points and extending that line to find the offset from the origin.

The two known points can be measured using established colorimetric techniques, i.e. a colorimeter or spectrophotometer traceable to national colour measurement standards and by using a standard conversion matrix for converting these measurements to camera R, G, B values.

If it is ensured that the black and white tiles are permanently in the field of view, then the calculation of offset (by using the two points given by black and white tiles) may be done by the computer each time an image is monitored to provide reliable compensation for camera characteristics in real time situations.

An alternative for checking the offset is to close the iris of the camera and use the R, G and B average values with the iris closed, to directly determine the offset.

Turning now to another problem of prior art systems which relate to non-uniformity of lighting characteristics across the material to be monitored, examples of methods for compensating such non-uniformity will now be described.

Non-uniformities in lighting, particular characteristics (e.g. internal reflections) of the lighting enclosure from which individual images are captured, and physical characteristics of the substrate material can all cause anomalies in the amount of reflected light(or transmitted light in the case of a back-lit web) arriving at the camera lens from different spatial locations within the camera field of view and need to be compensated for.

The principle behind such a compensation technique is to capture an image of a uniformly coloured or unprinted sample of material. Spatial image data from the unprinted web and incident to the camera lens embodies data concerning not only the uniformity of incident rays in different parts of the field of view but also the translucency of the web and the internal reflections from the lighting enclosure.

It is known, of course, that the unprinted sample of material is, in fact, an essentially uniform surface. By detecting spatial non-uniformities in camera output over the field of view, normalising settings may be achieved, so that individual output data from individual spatial areas is compensated. For example, the average R, G and B of an area of surface colour are recorded at its starting (trained) position, R_{T}, G_{T}, B_{T}. When the image is next captured, suppose this area in the design has moved to a less well-lit position and its average R, G and B are now R_{S}, G_{S}, B_{S}. If R₁ G₁, B₁, are the average RGB values for the area of the unprinted web corresponding to the starting position, and R₂, G₂, B₂ the average values of the unprinted web corresponding to the less well-lit position, then Rₛ, G_{S}, B_{S} are normalized as follows before comparing them with the trained values R_{T}, G_{T}, B_{T}:
R_{S} x R₁/R₂ , and the same for G_{S} and B_{S}.

There will now be described how an opportunist triggering technique may be used to monitor a moving web of material without the need for complex triggering methods.

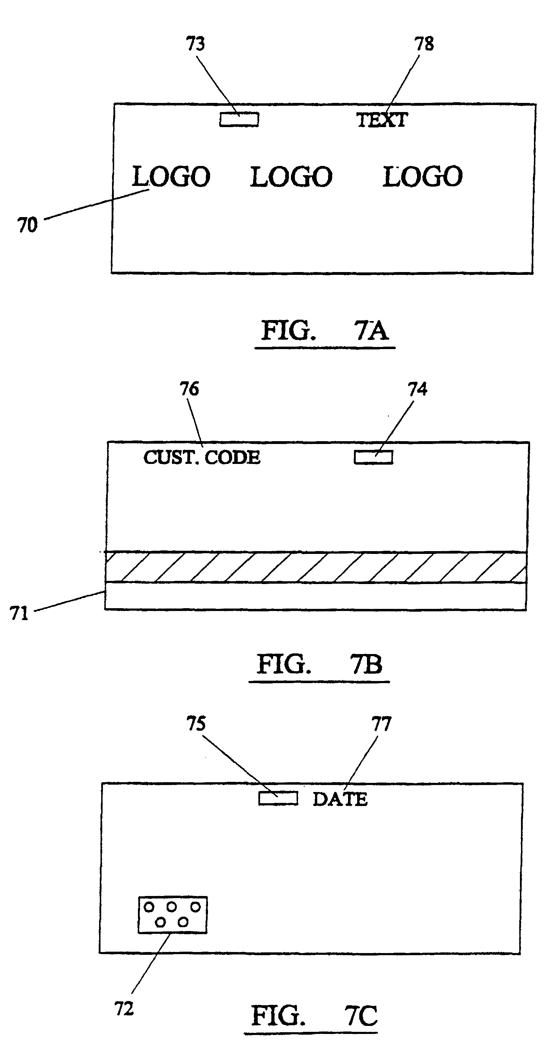

Referring now to Figure 6, there is shown a typical web of material which it may be desired to monitor. Figure 6 shows schematically, the nominal field of view seen by the monitoring camera and represented by rectangle 60 superimposed over a schematic view of moving web of material 61.

It will be appreciated that a pattern printed on the web 61 will have a given repeat length R. The repeat length defines the pattern printed on the web in its entirety and may be wider (as shown here) or narrower than a width W of the field of view 60 of the monitoring camera.

In previous systems, if it was desired to monitor a full repeat of the web 61, or indeed to simply monitor known portions of the sampled web, a reference mark on the web could be used in conjunction with a sensor to trigger an image capture cycle when the web has reached a particular point. In such systems, image capture is driven by the positioning of the web, and the image capture system must be ready to fire whenever the reference mark aligns with the triggering sensor. To implement such systems, the monitoring camera needs to be of a relatively sophisticated nature.

Embodiments tackle the problem of triggering in a different fashion.

A basic video camera may be used and image capturing driven by synchronisation (SYNC) signals from the camera itself.

According to the method, a particular unique feature within the full repeat (R) has its image data pre-stored in memory, so that it may be used for pattern recognition purposes. With the web of material running, synchronisation signals output from the video camera are monitored and lighting and image capture from the web triggered in accordance with the synchronisation signals, so that whenever the camera itself is ready to perform an image capture operation, and such an image capture operation is called for, lighting of the web is automatically synchronised and carried out on the basis of the SYNC signals.

Once an image capture operation has been performed, it is necessary to determine what the image is of. In that regard, the captured image data is analyzed using a pattern recognition programme, so as to determine exactly what the image is of, in relation to the unique feature in the pattern repeat. Thereafter, once the system knows exactly what the captured image data is of, standard colour monitoring procedures may be carried out to monitor quality of printing etc. and utilising any other software compensation techniques with regard to non-linearity compensation/non-uniformity of lighting compensation etc. to determine meaningful results.

A typical mode of operation of the apparatus will now be described.

With unprinted web material present and with the aperture restricted (if required) to ensure operation in the linear range of the camera characteristic, an image is captured in order to perform the lighting uniformity compensation referred to earlier. This image is hereinafter referred to as a "uniformity image"

Thereafter, with the approved printed material running on the press and with white and black reference tiles present, an image is captured. The reference tiles serve to enable an accurate determination of slope and offset of the camera characteristic during each capture operation as described previously and the white tile also serves to control the camera and keep the colour measurements repeatable as described in PCT application WO96/05489. Rectangles may be drawn over particular areas of the pattern to be monitored. A sufficient number of images are captured, in order to record details of the full repeat.

Next, a training operation is carried out. Training does the following: it automatically selects a pattern model and trains the colours, using lighting uniformity compensation and any other required software adjustments. The system may then be set to what is known as an "auto-inspect" mode, in which it will monitor the colours of the areas defined by the rectangles in the training image at ten second intervals throughout the run, giving real-time and logged results. Auto-inspect does the following: captures an image at intervals from the moving web, keeping the camera controlled; finds the pattern model and calculates image displacement from a trained image; inspects the coloured areas, allowing for the displacement and lighting uniformity; logs the results to file; and signals if the colour of any area is beyond warning limits.

During such automatic inspection, the training image will be displayed at all times and the ongoing measurements of any defined area may be displayed at will.

This opportunist triggering technique produces a distinct advantage over traditional web-triggering in applications where the print cylinders are not in register with each other.

For example, in the printing of filter-tip cigarette paper where it is desired to print a cork design on the paper in a seemingly random fashion there is illustrated in Figures 7A to 7C a pattern to be printed by means of three cylinders.

The first cylinder shown in Figure 7A is utilised to print a manufactures mark 70 (LOGO). The mark (LOGO) needs to be printed once per cigarette.

The second cylinder shown in Figure 7B is used to print a first colour 71, for example a solid yellow 11. The third cylinder shown in Figure 7C is utilised to print a further pattern 72, for instance a brown colour with gaps formed in it to allow the yellow to show through those gaps. Prints 71 and 72 together form the cork design.

The mark 70 must be printed on every cigarette, but the filter tip design, made up of the first colour 71 from cylinder 2 overlaid by brown from cylinder 3, must appear random, so its repeat is say 3.5 cigarettes.

Each cylinder further prints a rectangular box 73-75 at the edge of the web showing its ink colour once per cylinder circumference as well as a text string 76, 77, 78.

Because it is desired to produce a non-regular pattern there is no requirement for the cylinders to have the same circumference, nor for them to rotate in phase with each other. The ink boxes therefore appear at random relative to each other, and this causes problems in web-triggered inspection systems.

Because it is the colour of the ink boxes which is to be monitored, and because each ink box is a fixed distance from its associated text string, the problem with regard to web-triggering which was encountered in the prior art may be removed altogether by the use of the opportunistic triggering techniques described previously. This is achieved by using the unique text string 76-78 which accompanies each ink box 73-75 as a pattern model, and searching can be done every captured image for all 3 text strings, to thus find the ink boxes 73-75 and then inspect their colour.

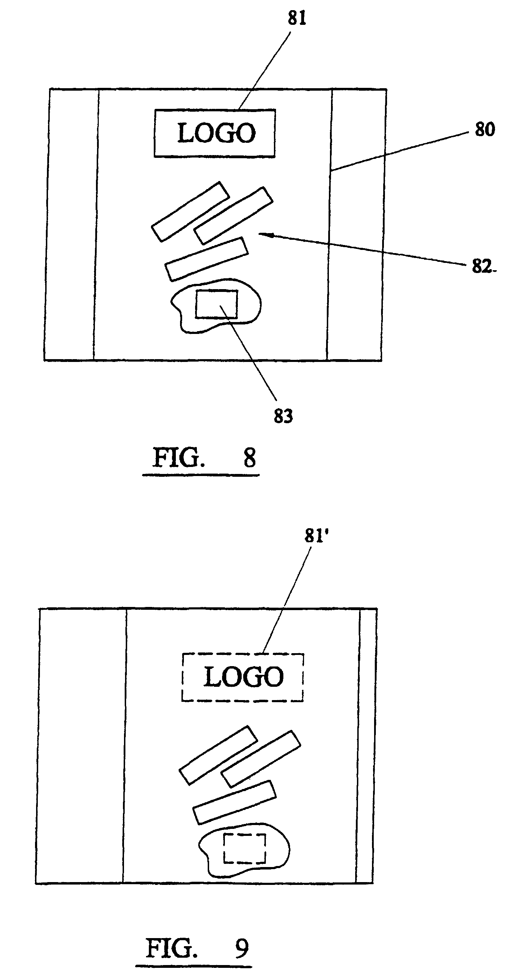

Referring now to Figures 8 and 9, there is illustrated a method for inspection of an area of a web of material to sub-pixel accuracy.

Figure 8 shows a camera field of view with a web of material 80, on which there is printed a logo 81 and other image data 82 including an inspection area 83. The view shown in Figure 8 is, for instance, an original training image used during setup.

Figure 9 is an image captured during a subsequent image capture cycle and featuring the same elements as the image shown in Figure 8. In Figure 9, it will be noted that the web has been displaced to the right of the field of view by an amount and that the actual positioning of the design is vertically displaced. This vertical displacement can occur due to triggering inaccuracy or may occur as a result of the use of an opportunistic type triggering method as previously described.

The element 81 referred to above as the pattern model whose data is stored from the original training image is used as a search pattern to locate the same pattern in the captured image. Once that design has been located in that captured image, its displacement can be calculated which, for instance, may be 50.6 pixels to the right and 73.3 pixels down. Knowing the displacement of the pattern model, the area to be inspected 83 can also be located by using the same displacement, i.e., it will be known that that area is also 50.6 and 73.3 pixels displaced relative to its original position.

In the newly captured image, a rectangle of pixels may be processed which is slightly larger in area than the original inspection rectangle in the training image and a margin of error given by adding an extra row and an extra column of pixels. Because the displacement involves pixel fractions, the area of the design to be inspected now straddles pixels. Here, the assumption is made that the digitised value of the voltage level corresponding to 0.1 pixel corresponds to 0.1 of the digitized value of the voltage level for that entire pixel. In order to measure the average R, G or B values of the area, a fraction of the pixel values around the perimeter is taken as follows:

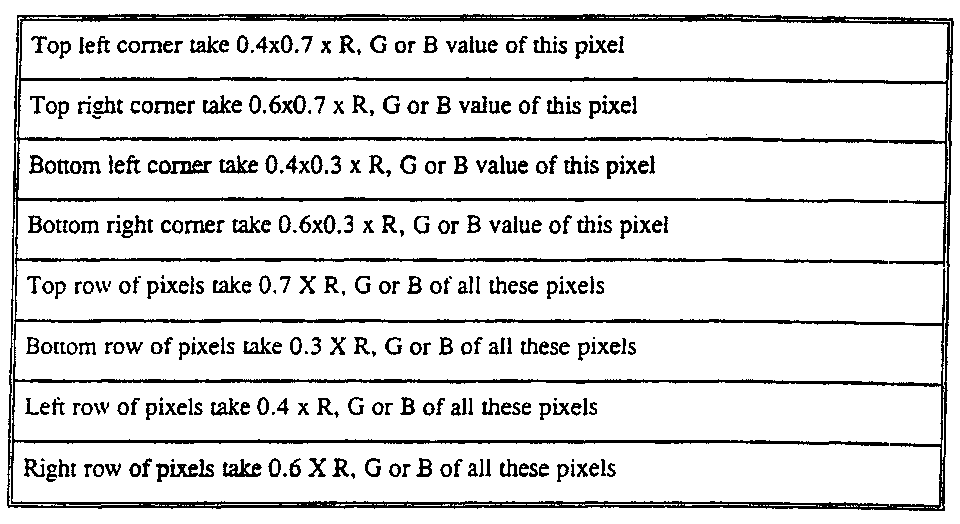

Add the R, G or B of each pixel in the displaced area, and the R, G or B of each straddling pixel, weighted as shown in the above table. Divide the grand total by (width x height), and this gives the average R, G or B of the inspected area to sub-pixel accuracy. Each of the channels R, G and B must be processed independently.

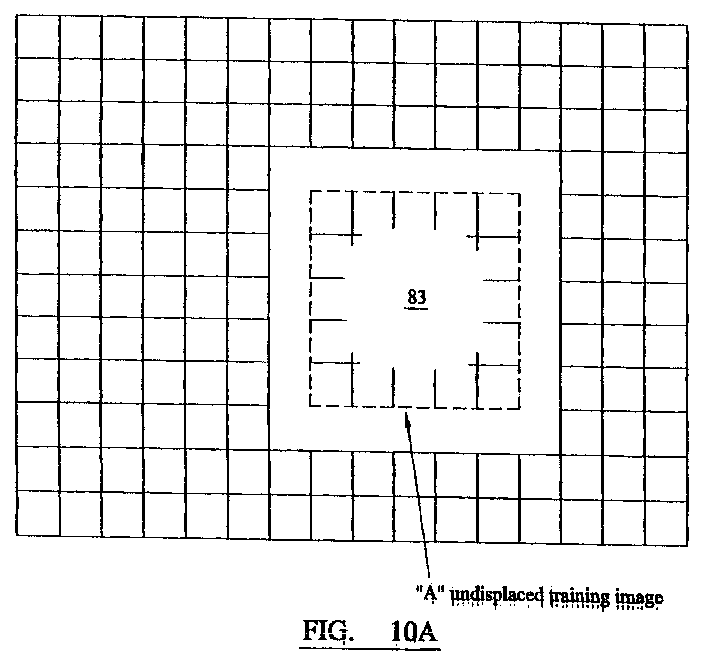

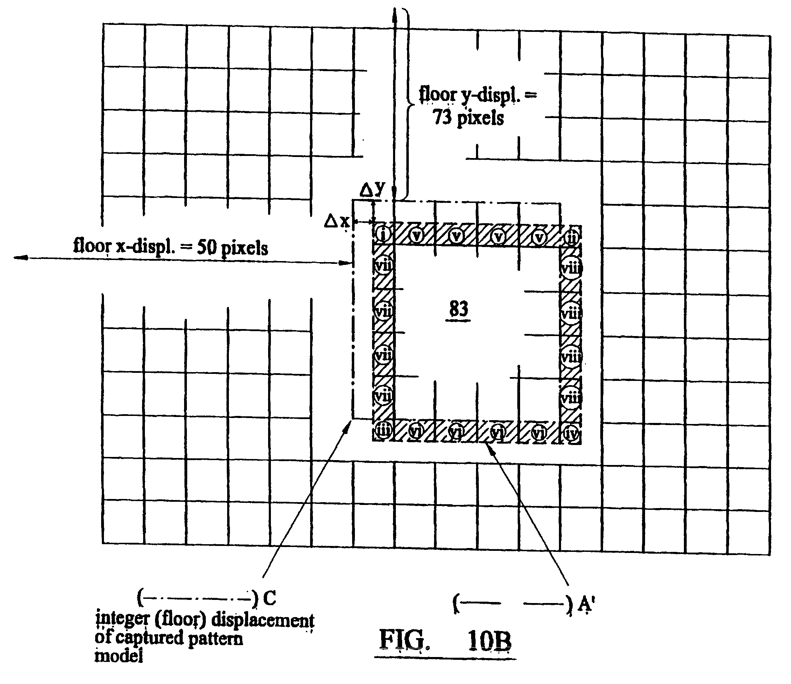

To explain the above further, Figures 10A and 10B are referred to.

Figure 10A shows a training image together with a inspection area 83 to be inspected and marked with a rectangle A (shown as -----). Each illustrated "square" represents a pixel and the inspection area necessarily encompasses whole (integer) pixels. Note that an unrealistically small inspection area of 5x5 pixels is shown here so as to enable pixel fractions to be demonstrated. Actual inspection areas used would in practice be very much larger in area.

Figure 10B shows a captured image with the inspection area 85 displaced by 50.6 pixels in the horizontal (x) direction and 73.3 pixels in the vertical (y) direction.
For the purposes of the following discussion, it is of course evident that to illustrate the boundary conditions, an actual displacement of 50 x 73 cannot be shown in Figure 10B. Rather, Figure 10B is used solely for the purposes of discussing what happens at the subpixel level. The square A containing inspection area 83 of Figure 10A is shown in Figure 10B as having moved to position A'. The "floor" integer pixel position, i.e. the pattern model shifted by 50 pixels horizontally and 73 pixels vertically is marked as rectangle C (shown _._._.).

In the Figure, Δx = fractional pixel horizontal displacement (+VE meaning displacement to the right); Δy = fractional pixel vertical displacement (+VE means displacement in a downward direction); x-displ = integer part of horizontal displacement; y-displ = integer part of vertical displacement.

In the example given, Δx = 0.6, Δy = 0.3, floor x-displ = 50, floor y-displ = 73.

If Δx and Δy are positive, a column of pixels to the right of the displaced area and a row of pixels below the displaced area are processed. If Δx and Δy are, on the other hand, negative, a column to the left and a row above are processed.

The same equations for calculating the fraction of each pixel in the bottom, top, left and right rows and columns in the extended processing area are used whether Δx and/or Δy happen to be positive or negative (+VE or -VE). In otherwords, concerning the perimeter area for the example shown in Figures 8/9 and the displacements of which are illustrated schematically in Figures 10A and 10B, the fractional pixel values providing the weighting as given in the table 1 are shown as shaded areas in Figure 10B and are obtained by performing the following calculations:
(i) Top left hand corner pixel = (1-Δy) (1-Δx) x R, G or B pixel value
(ii) Top right hand corner area pixel = (1-Δy) (Δx) x R, G or B pixel value
(iii)Bottom left corner pixel = (Δy) (1-Δx) x R, G or B pixel value
(iv) Bottom right corner pixel = (ΔY) (Δx) x R, G or B pixel value
(v) Top row of pixels = (1-Δy) x R, G or B pixel value
(vi) Bottom row of pixels = Δy x R, G or B pixel value
(vii) Left row of pixels = (1-Δx) x R, G or B pixel value
(viii) Right row of pixels = Δx x R, G or B pixel value

Again, when inspecting these perimeter values the assumption is made that the digitized value of the voltage level corresponding to 0.1 pixel corresponds to 0.1 of the digitized value of the voltage level for that entire pixel.

By referring to the above, it may be seen that there is provided a method for inspection of an area of a web of material to sub-pixel accuracy which facilitates web inspection even when parts of the design on the entire web appear to vary in a seemingly random fashion.

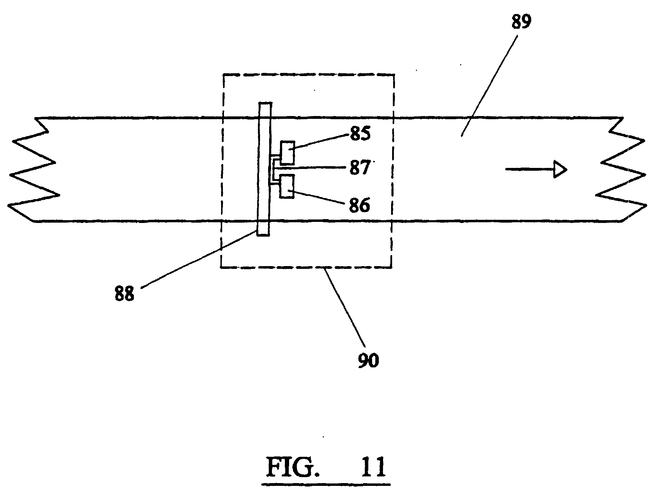

Figure 11 shows a hardware arrangement with a camera 85 and flash 86 associated with one another on a moving sled 87 of a scanner 88. The camera 85, flash 86 and sled 87 of the scanner 88 are shown mounted underneath a moving web of material 89. A lighting enclosure 90 is also associated with the scanner 88. In the arrangement shown, the web is arranged to move from left to right as shown in the figure and the camera and flash are mounted for up and down movement.

In operation, the camera and flash move transversely with respect to the web so as to provide a means of mechanical compensation for transverse ("x"-axis) movement of the web. The amount of mechanical movement of the camera and flash is calculated by means of the above-mentioned procedure for measuring the displacement of a pre-stored pattern model in a captured image relative to its position in a training image and translating (e.g. using a scaling factor) that displacement value into a "real-world" value by which the camera is moved so as to mechanically compensate by reducing said displacement. After movement of the camera 85 and flash 86, there is then performed a subsequent image capture operation in which the transverse movement of the web is already compensated to a degree.

Such mechanical compensation is not as accurate as that which may be achievable by sub-pixel interpolation as previously described, so in practice a combination of the mechanical method together with sub-pixel interpolation is preferred. In this combination method, following movement of camera 85/flash 86, pattern model displacement is again measured and the step of colour calculating then performed.

When the camera 85 is a triggered camera, a variable delay can be introduced between the sensing of the trigger signal (the trigger signal being activated from a feature in the design repeat) and the initiation of the flash and image capture. This allows the "y" displacement to be compensated. Once again, this method is not as accurate as the sub-pixel interpolation method, so, ideally, those methods are used in combination.

The reader's attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of calibrating a colour monitoring system so as to compensate for non-ideal real camera characteristics, the method comprising:
establishing a camera offset by measuring or calculating the output voltage of the camera when substantially no light falls on any of its sensor elements, hereinafter referred to as establishing the offset;
establishing the point at which a graph of input light intensity against camera output voltage starts to deviate from a substantially linear characteristic, hereinafter referred to as establishing the knee; and
restricting the amount of light incident on all sensor elements of the camera such that the maximum output corresponds to a voltage at, or below, the knee, and all light intensities lower than the maximum light intensity are within the range of linear operation,
wherein the step of establishing of camera offset is carried out on a periodical basis to keep pace with the variations in offset value caused by variation in ambient conditions and/or
wherein the step of establishing offset is carried out whenever an image capture operation for capturing a desired image to be monitored is to be carried out.

2. The method of claim 1, wherein setting the point of zero light intensity is achieved by closing the camera iris.

3. The method of claim 1 or 2, wherein setting the point of zero light intensity is achieved by setting the camera to monitor a black image, or a black part of an image field of the camera.

4. The method of claims 1 or 2, wherein setting the point of zero light intensity is achieved by extrapolating from measurements obtained from two or more points of known reflectance somewhere in an image field of the camera.

5. The method of claim 4, wherein one point of known reflectance comprises an integral part of the desired image itself.

6. The method of claim 4 or 5, wherein one point of known reflectance comprises a white reference tile within the image field.

7. The method of any of the preceding claims, wherein there is provided a source of maximum light reflectance within the image field by ensuring that a white object is present somewhere in the image field.

8. The method of any of the preceding claims, wherein restricting the camera to operate within the linear region is achieved by reducing the camera aperture by closing the iris to a predetermined degree such that the output voltage when measuring the source of maximum light intensity corresponds to a camera output voltage at or below the knee.

9. The method according to claim 8, wherein the iris is restricted so as to give an appropriate camera output voltage which is a proportion of a full scale value.

10. The method of claim 8 or 9, wherein restriction of the iris is arranged to ensure that a perfect white reflector registers at the top of the linear region and to then scale down to find appropriate values of camera output versus light intensity.

11. The method of any of the preceding claims, wherein the step of establishing the knee is carried out less frequently than the step of establishing the offset.

12. The method of claim 11, wherein the step of establishing the knee is carried out before commencing a plurality of print runs each comprising a plurality of image capture operations.

13. The method of claim 11 or 12, wherein the step of establishing the knee is carried out after completing a plurality of print runs each comprising a plurality of image capture operations.

## Patentansprüche

1. Verfahren zur Kalibrierung eines Farbüberwachungssystem, um nicht ideale reale Kameracharakteristiken auszugleichen, wobei das Verfahren umfasst:
Festlegen einer Kamera-Messwertverschiebung durch Messen oder Berechnen der Ausgangsspannung der Kamera, wenn im Wesentlichen kein Licht auf eines ihrer Sensorelemente fällt, nachfolgend als Festlegung der Messwertverschiebung bezeichnet;
Festlegen eines Punktes, an dem eine Kennlinie der eingegebenen Lichtintensität gegen die Kameraausgangsspannung beginnt, von einer im Wesentlichen linearen Charakteristik abzuweichen, nachfolgend als Festlegen der Krümmung bezeichnet; und
Beschränken der Lichtmenge, die auf alle Sensorelemente der Kamera einfällt, so dass die maximale Ausgabe einer Spannung auf Höhe oder unter der Krümmung entspricht, und alle Lichtintensitäten, die niedriger sind als die maximale Lichtintensität, innerhalb des Bereichs des linearen Betriebs liegen,
wobei der Schritt des Festlegens der Kamera-Messwertverschiebung auf einer periodischen Basis ausgeführt wird, um mit den Änderungen im Messwertverschiebungswert, die von einer Änderung der Umgebungsbedingungen verursacht werden, Schritt zu halten und/oder
wobei der Schritt des Festlegens der Messwertverschiebung ausgeführt wird, wann immer ein Bilderfassungsvorgang zum Erfassen eines gewünschten zu überwachenden Bildes ausgeführt wird.

2. Verfahren nach Anspruch 1, wobei des Festlegen des Punktes der Null-Lichtintensität durch Schließen der Kamerablende erreicht wird.

3. Verfahren nach Anspruch 1 oder 2, wobei das Festlegen des Punktes der Null-Lichtintensität durch Einstellen der Kamera zur Überwachung eines schwarzen Bildes oder eines schwarzen Teils eines Bildfeldes der Kamera erreicht wird.

4. Verfahren nach Anspruch 1 oder 2, wobei das Festlegen des Punktes der Null-Lichtintensität durch Ableiten von Messungen, die von zwei oder mehr Punkten bekannter Reflexion irgendwo in einem Bildfeld der Kamera erhalten werden, erreicht wird.

5. Verfahren nach Anspruch 4, wobei ein Punkt der bekannten Reflexion einen wesentlichen Teil des gewünschten Bildes selbst beinhaltet.

6. Verfahren nach Anspruch 4 oder 5, wobei ein Punkt der bekannten Reflexion eine weiße Referenzfläche innerhalb des Bildfeldes beinhaltet.

7. Verfahren nach einem der vorhergehenden Ansprüche, wobei eine Quelle maximaler Lichtreflexion innerhalb des Bildfeldes durch Sicherstellung, dass ein weißes Objekt irgendwo im Bildfeld vorhanden ist, vorgesehen ist.

8. Verfahren nach einem der vorhergehenden Ansprüche, wobei die Beschränkung der Kamera, in einem linearen Bereich zu arbeiten, erreicht wird durch Verringern der Kameraöffnung durch Schließen der Blende auf einen vorbestimmten Grad, so dass die Ausgangsspannung beim Messen der Quelle der maximalen Lichtintensität der Kameraausgangsspannung auf Höhe oder unter der Krümmung entspricht.

9. Verfahren nach Anspruch 8, wobei die Blende beschränkt ist, um so eine passende Kameraausgangsspannung zu gewähren, die in Proportion zu einem Gesamtwertbereich ist.

10. Verfahren nach Anspruch 8 oder 9, wobei die Beschränkung der Blende angeordnet ist um zu gewährleisten, dass ein perfekter weißer Reflektor an der obersten Stelle des linearen Bereichs erfasst wird und dann herunterzuskalieren, um passende Werte der Kameraausgabe gegenüber der Lichtintensität zu finden.

11. Verfahren nach einem der vorhergehenden Ansprüche, wobei der Schritt des Festlegens der Krümmung weniger oft ausgeführt wird als der Schritt des Festlegens der Messwertverschiebung.

12. Verfahren nach Anspruch 11, wobei der Schritt des Festlegens der Krümmung ausgeführt wird bevor eine Vielzahl von Druckvorgängen begonnen wird, von denen jeder eine Vielzahl von Bilderfassungsvorgängen beinhaltet.

13. Verfahren nach Anspruch 11 oder 12, wobei der Schritt des Festlegens der Krümmung ausgeführt wird nach Beendigung einer Vielzahl von Druckvorgängen, von denen jeder eine Vielzahl von Bilderfassungsvorgängen beinhaltet.

## Revendications

1. Procédé pour calibrer un système de contrôle de couleur de manière à compenser des caractéristiques non idéales d'une caméra réelle, le procédé comprenant :
l'établissement d'un déport de caméra en mesurant ou en calculant le voltage de sortie de la caméra lorsque sensiblement aucune lumière ne tombe sur l'un quelconque de ses éléments capteurs, opération désignée dans ce qui suit par « établissement du déport » ;
l'établissement du point auquel un graphique représentant l'intensité de la lumière entrante en fonction du voltage de sortie de la caméra commence à dévier d'une caractéristique sensiblement linéaire, opération désignée dans ce qui suit par « établissement du coude » ; et
restriction de la quantité de la lumière incidente sur tous les éléments capteurs de la caméra de telle façon que la sortie maximum corresponde à un voltage au niveau ou au-dessous du coude, et toutes les intensités de lumière sont à l'intérieur de la plage de fonctionnement linéaire,
dans lequel l'opération d'établissement du déport la caméra est effectuée sur une base périodique pour s'accorder avec les variations de la valeur de déport provoquée par des variations des conditions ambiantes, et/ou
dans lequel l'opération d'établissement du déport est effectuée chaque fois qu'une opération de capture d'image pour capturer une image désirée à contrôler doit être effectuée.

2. Procédé selon la revendication 1, dans lequel la fixation du point d'intensité lumineuse nulle est exécutée en fermant le diaphragme de la caméra.

3. Procédé selon l'une ou l'autre les revendications 1 et 2, dans lequel la fixation du point d'intensité lumineuse nulle est exécutée en disposant la caméra de façon à contrôler une image noire, ou une partie noire d'un champ d'image de la caméra.

4. Procédé selon l'une ou l'autre des revendications 1 et 2, dans lequel la fixation du point d'intensité lumineuse nulle est réalisée en extrapolant à partir de mesures obtenues depuis deux ou plusieurs points de réflectance connus quelque part dans un champ d'image de la caméra.

5. Procédé selon la revendication 4, dans lequel un point de réflectance connu comprend une partie intégrale d'une image désirée elle-même.

6. Procédé selon l'une ou l'autre des revendications 4 et 5, dans lequel un point de réflectance connu comprend un pavé de référence à l'intérieur du champ d'image.

7. Procédé selon l'une quelconque des revendications précédentes, dans lequel est prévue une source de réflectance lumineuse maximum à l'intérieur du champ d'image en s'assurant qu'un objet blanc soit présent quelque part dans le champ d'image.

8. Procédé selon l'une quelconque des revendications précédentes, dans lequel la restriction de la caméra afin de fonctionner à l'intérieur de la région linéaire est assurée en réduisant l'ouverture de la caméra par fermeture du diaphragme jusqu'à un degré prédéterminé tel que le voltage de sortie, lorsqu'on mesure la source d'intensité lumineuse maximum, correspond à un voltage de sortie de caméra au niveau de ou au-dessous du coude.

9. Procédé selon la revendication 8, dans lequel le diaphragme est restreint de manière à donner un voltage de sortie de caméra appropriée qui est une proportion d'une valeur à pleine échelle.

10. Procédé selon l'une ou l'autre des revendications 8 et 9, dans lequel la restriction du diaphragme est effectuée de manière à assurer qu'un réflecteur blanc parfait concorde au sommet de la région linéaire, et de manière à réduire ensuite l'échelle pour trouver des valeurs appropriées de la sortie de la caméra en fonction de l'intensité lumineuse.

11. Procédé selon l'une quelconque des revendications précédentes, dans lequel l'opération d'établissement du coude est effectuée moins fréquemment que l'opération d'établissement du déport.

12. Procédé selon la revendication 11, dans lequel l'opération d'établissement du coude est effectuée avant de commencer une pluralité de séquences d'impression qui comprennent chacune une pluralité d'opérations de capture d'image.

13. Procédé selon l'une ou l'autre des revendications 11 et 12, dans lequel l'opération d'établissement du coude est effectuée après avoir terminé une pluralité de séquences d'impression qui comprennent chacune une pluralité d'opérations de capture d'image.
